Europäisches Patentamt

European Patent Office

Office européen des brevets

(11) Publication number: **0 195 568**
**A2**

(12) **EUROPEAN PATENT APPLICATION**

(21) Application number: **86301645.7**

(22) Date of filing: **07.03.86**

(51) Int. Cl.⁴: **H 02 J 13/00**

(30) Priority: **21.03.85 GB 8507418**

(43) Date of publication of application:
**24.09.86 Bulletin 86/39**

(84) Designated Contracting States:
**AT DE FR NL**

(71) Applicant: **Smiths Industries Public Limited Company**
**765, Finchley Road**
**London, NW11 8DS(GB)**

(72) Inventor: **Heeks, Thomas Ralph**
**19 Bushcombe Close Woodmancote**
**Cheltenham Gloucestershire(GB)**

(74) Representative: **Flint, Jonathan McNeill**
**SMITHS INDUSTRIES PUBLIC LIMITED COMPANY 765**
**Finchley Road**
**London NW11 8DS(GB)**

(54) **Mains signalling networks and systems.**

(57) A mains signalling network (1) for a mains power supply line (2) has a controller (10) that controls switching of appliances (3 to 6) connected to the supply line via respective nodes (30 to 60). Each node has a switch (36) by which a code can be set for the node, the controller having a keyboard (11) for addressing the desired node. When a node receives a signal from the controller, the node generates a reply signal along the supply line (2). The controller generates the signal for controlling the appliance after receipt of the reply signal. If the controller receives signals other than those initiated by the controller, it generates signals to prevent operation of the nodes. Signals from the controller (10) include a code identifying the controller followed by a code identifying a node, whereas reply signals from the nodes include a code identifying that node followed by a code identifying the controller.

*FIG.1.*

EP 0 195 568 A2

## Mains Signalling Networks and Systems

This invention relates to mains signalling networks for mains power supply lines comprising a controller and at least one node, the controller supplying signals to the node via the power supply line and the node being responsive to the signals supplied to it via the mains power supply line so as to control operation of an associated appliance.

Mains signalling networks enable the operation of appliances to be controlled remotely without the use of additional wiring or radio transmission. The network consists of one or more nodes which are plugged into mains supply sockets in the premises in which the network is to be established. The appliance to be controlled, such as a lamp, heater, cooker, radiator valve or such like, is connected to the node, to complete the system, so that operation of the appliance is controlled by switching of the node. A controller unit is then plugged into any other mains supply socket in the premises. When the controller is actuated by the user, it supplies coded signals along the mains power supply line to each node. If each node is given a different code, the appropriate node can be selected by suitably coding the signals generated by the controller.

In this way it is possible to control operation of many nodes at remote locations without the need to provide additional wiring in the premises.

Mains signalling networks do, however, have the disadvantage that they can be susceptible to interference on the mains power supply line. This interference can arise from the normal background electrical interference present on mains power supply lines or from the use of other mains signalling networks in different premises on the same mains supply. Signals from one mains signalling network will propagate the entire supply and may therefore cause undesired operation of appliances in outside premises unless measures are taken to avoid this.

It is possible to install a low-pass filter at the point where a mains supply enters the premises, to filter out all extraneous signals. This, however, requires skilled installation, thereby avoiding one of the main advantages of mains signalling networks. Filters can, furthermore, be bypassed under certain circumstances by adjacent wiring capacitances. Also, filters will not protect against noise generated within the premises.

In an alternative arrangement, each premises is given a unique code so that a node will only be controlled if it first receives that unique code from the controller. This can be effective to prevent accidental interference but is not entirely proof from malicious interference by someone trying each code in turn, such as by means of a computer.

It is an object of the present invention to provide a mains signalling network which is less susceptible to interference.

According to one aspect of the present invention, there is provided a mains signalling network of the above-specified kind, characterised in that the controller generates signals to prevent operation of the node when the controller receives signals via the mains power supply line other than signals initiated by the controller itself.

The node may be initiated by signals from the controller to supply coded signals via the mains power supply line to the controller. In this way, the controller prevents operation of the node when the controller detects the presence of any extraneous signal, that is any signal other than one propagated directly by the controller itself or by the addressed node - the 'handshake' signal from the node initiated by the signal from the controller. Preferably the coded signal from the node includes a code identifying the node followed by a code identifying the controller.

The controller may generate a first signal identifying the node for which the signal is intended, the node generating a reply signal in response to the signal from the controller, and the controller generating a signal to the node controlling operation of the associated appliance only in response to receipt of the reply signal from the node. The first signal generated by the controller preferably includes a code identifying the controller followed by a code identifying the node for which the signal is intended.

The network may include a plurality of nodes each node being addressed by signals from the controller having a different respective code.

The controller may include a comparator having an input connected to receive signals from the or each node via the power supply line indicative of the code of the controller and the respective node, and the comparator being connected to compare these signals with signals from within the controller representative of the code of the controller and of the code of the node addressed by the controller.

The or each node may include a switch for setting a code for that node, and a comparator that compares the code set by the switch with signals supplied to the node via the power supply line. The or each node may generate signals over the supply line to prevent operation of the or each node when the node receives signals via the supply line which signals are coded as indicating that they originate from that node.

A system including several appliances connected with a mains power supply line and a mains signalling network controlling switching of the appliances, in accordance with the present invention, will now be described, by way of example, with reference to the accompanying drawings, in which:

Figure 1          shows the system schematically; and

Figures 2 and 3   show different parts of the network schematically, in greater detail.

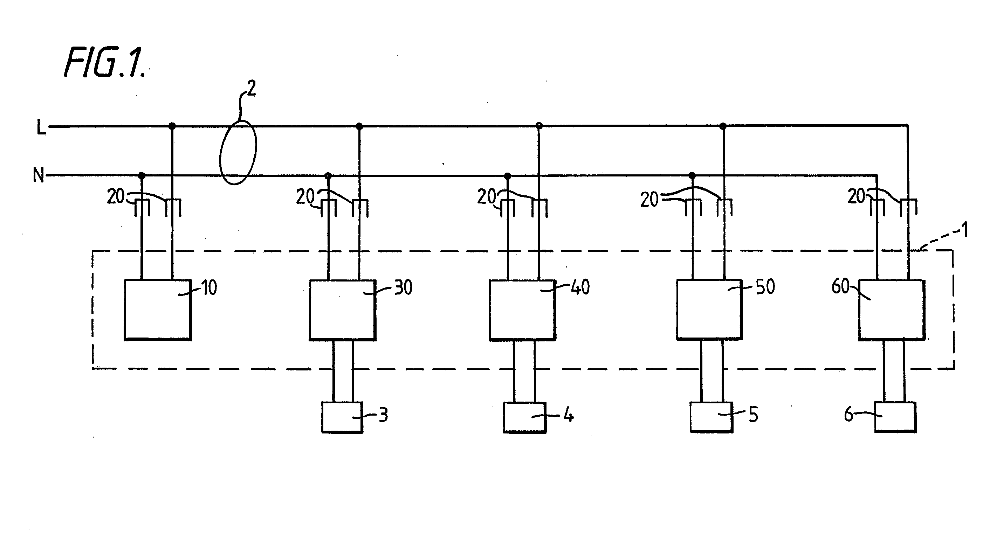

With reference to Figure 1, there is shown a system including a mains signalling network 1 connected to a mains power supply line 2 that is used to control operation of associated appliances 3 to 6.

The network 1 comprises a controller 10 and four nodes 30,40,50 and 60, although any number of nodes could be used. The controller 10 and nodes 30 to 60 are plugged directly into mains outlet sockets 20 disposed in any room throughout the premises.

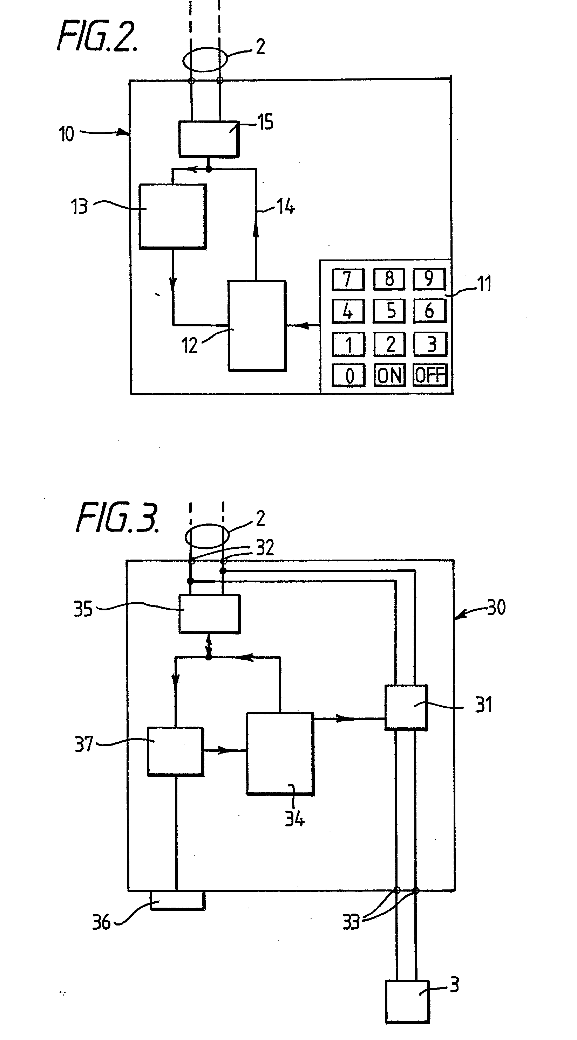

With reference now also to Figure 2, the controller 10 includes a keyboard 11, or other switching devices, which is connected to a processing unit 12. The processing unit 12 also receives input signals from a comparator unit 13, and supplies output signals via line 14 to an isolator 15 connected to the live and neutral terminals of the mains power supply 2. The comparator unit 13 receives output signals from the processing unit 12 and input signals from the power supply line 2 via the isolator 15. Instead of signalling via the live and neutral lines of the mains power supply 2, signalling could be achieved via neutral and earth lines.

The nodes 30 to 60 are of identical construction, one node 30 of which will now be described with reference to Figure 3. The node 30 includes a power relay 31 connected in series between the node input 32 and the node output 33 to which the appliance 3 is connected. Switching of the relay 31 is controlled by a processing unit 34 which receives mains signals from the input 32 via an isolator 35. The node 30 also includes a code setting switch 36 which the user sets to give each node a unique code. The switch 36 is coupled with a comparator unit 37 which also receives the input signals from the isolator 35 and which supplies output signals to the processing unit 34.

In operation, the user enters the code number of the node to be controlled in the keyboard 11 of the controller 10 followed by the instruction, that is, ON or OFF.  This causes the processing unit 12 to generate coded signals representative of this code number preceded by coded signals representing the code number of the controller 10.  The code number of the controller 10 is preset in the controller in the processing unit 12 and does not need to be entered by the user.

These two coded signals are supplied onto the mains power supply line 2, as a `handshake´ signal via the isolator 15 and will therefore be received by every node 30 to 60 connected to the same mains power supply. The coded signals received by each node 30 to 60 are supplied to its comparator 37, via the isolator 35, the comparator comparing the input signals with the code number set by the respective switch 36.  If the comparator 37 identifies the input signal as being intended for that particular node, it supplies a signal to the processing unit 34 which causes the processing unit to be held in readiness for receiving instructions and also causes it to generate an output signal representative of the node code followed by the controller code.  This output, or `handshake´ signal is supplied via the isolator 35 onto the power supply line 2 so that it will be received by the controller 10 and each node 40 to 60.  When the comparator 13 in the controller 10 identifies this signal, in effect, a reply or `handshake´ signal from the node addressed, it causes the processor 12 to generate the instruction signal `ON´ or `OFF´.  This is supplied via the power line 2 to every node 30 to 60 but will only cause actuation of that node 30 held in readiness.

The processing unit 12 in the controller 10 will only generate the instruction signal if it receives back the reply signal from a node and if it has previously addressed that node by generating a signal representing the controller code and the node code. If the controller 10 receives any other signals, such as a node address signal or a node reply signal which has not been initiated by the controller itself, it generates and supplies an abort signal to the power supply line 2 which has the effect of preventing operation of the nodes. This signal ensures that all the nodes remain in the same state, whether on or off.

If we consider the circumstances in which an interfering signal is supplied to the mains supply line, such as from a mains signalling network in different premises, this will not cause operation of the nodes 30 to 60, even if the signal includes the correct node code and the correct controller code. Such signals would be received by the controller 10 and, because the signals were not initiated by the controller itself, they are readily identified. This causes the controller 10 to generate the abort signal, thereby preventing a change in the state of any node. If the interference was such that it was too weak in the region of the controller 10 to cause generation of an abort signal, but was strong in the region of one node, this could cause the node to generate a reply signal. The reply signal, however, would be received by the controller 10 and would be immediately identified as not being initiated by the controller. This would thereby cause the controller 10 to generate an abort signal preventing operation of the node.

In this way, the mains signalling network maintains a high integrity without the need for filters connected in the mains supply line. In the network of the present invention, it is also possible for the controller to be located outside the premises in which the nodes are installed providing this in on the same mains supply system.

The construction of the controller 10 and nodes 30 to 60 may be similar to enable duplication of some circuits. In this respect, a node 30 to 60 may also be arranged to generate an abort signal in certain circumstances, such as when it receives a signal which perports to come from itself, that is a signal preceded by its own node address code.

## CLAIMS

1.     A mains signalling network for a mains power supply line comprising a controller and at least one node, the controller supplying signals to the node via the power supply line and the node being responsive to the signals supplied to it via the mains power supply line so as to control operation of an associated appliance, characterised in that the controller (10) generates signals to prevent operation of the node (30 to 60) when the controller receives signals via the mains power supply line (2) other than signals initiated by the controller itself.

2.     A mains signalling network according to Claim 1, characterised in that the node (30 to 60) is initiated by signals from the controller (10) to supply coded signals via the mains power supply line (2) to the controller.

3.     A mains signalling network according to Claim 2, characterised in that the coded signal from the node (30 to 60) includes a code identifying the node followed by a code identifying the controller (10).

4.     A mains signalling network according to any one of the preceding claims, characterised in that the controller (10) generates a first signal identifying the node (30 to 60) for which the signal is intended, that the node generates a reply signal in response to the signal from the controller, that the controller generates a signal to the node controlling operation of the associated appliance (3 to 6) only in response to receipt of the reply signal from the node.

5.     A mains signalling network according to Claim 4, characterised in that the first signal generated by the controller (10) includes a code identifying the controller followed by a code identifying the node (30 to 60) for which the signal is intended.

6.     A mains signalling network according to any one of the preceding claims, characterised in that the network includes a plurality of nodes (30 to 60) and that each node can be addressed by signals from the controller (10) having a different respective code.

7.     A mains signalling network according to any one of the preceding claims, characterised in that the controller (10) includes a comparator (13), that the comparator has an input connected to receive signals from the or each node (30 to 60) via the power supply line (2) indicative of the code of the controller and the respective node, and that the comparator (13) is connected to compare these signals with signals from within the controller representative of the code of the controller and of the code of the node (30 to 60) addressed by the controller.

8.     A mains signalling network according to any one of the preceding claims, characterised in that the or each node (30 to 60) includes a switch (36) for setting a code for that node, and a comparator (37) that compares the code set by the switch with signals supplied to the node via the power supply line (2).

9.     A mains signalling network according to any one of the preceding claims, characterised in that the or each node (30 to 60) generates signals over the supply line (2) to prevent operation of the or each node when the node receives signals via the supply line which signals are coded as indicating that they originate from that node.

FIG.1.

0195568

## FIG.2.

## FIG.3.